# EUROPEAN PATENT SPECIFICATION

(11) **EP 0 813 982 B1**
(45) Date of publication and mention of the grant of the patent: **28.11.2001**
(21) Application number: 97109950.2
(22) Date of filing: 18.06.1997
(51) Int. Cl.: B60G 17/015, F16F 9/46, F16F 9/36

(54) **Damping mechanism of automotive vehicle**
Dämpfungsmechanismus für ein Kraftfahrzeug
Mécanisme d'amortissement d'un véhicule automobile

(30) Priority: 19.06.1996 JP 15859896
(43) Date of publication of application: 29.12.1997
(73) Proprietor: TOYOTA JIDOSHA KABUSHIKI KAISHA, Aichi-ken (JP)
(72) Inventor: Kazuo, Ogawa, Toyota-shi, Aichi-ken (JP); Masaaki, Tabata, Toyota-shi, Aichi-ken (JP); Shoichi, Shono, Toyota-shi, Aichi-ken (JP)
(74) Representative: Pellmann, Hans-Bernd, Dipl.-Ing.

(56) References cited:
- EP-A- 0 328 843
- EP-A- 0 741 051
- DE-A- 4 107 599
- GB-A- 2 227 547
- US-A- 5 145 206
- US-A- 5 180 039
- US-A- 5 435 421
- PATENT ABSTRACTS OF JAPAN vol. 009, no. 055 (M-362), 9 March 1985 & JP 59 190015 A (BOEICHO GIJUTSU KENKYU HONBU;OTHERS: 0J), 27 October 1984,
- PATENT ABSTRACTS OF JAPAN vol. 009, no. 307 (M-435), 4 December 1985 & JP 60 143237 A (AISHIN SEIKI KK;OTHERS: 01), 29 July 1985,
- PATENT ABSTRACTS OF JAPAN vol. 017, no. 604 (M-1506), 8 November 1993 & JP 05 180260 A (TOYOTA CENTRAL RES & DEV LAB INC;OTHERS: 01), 20 July 1993,

## Description

The present invention relates to a damping mechanism of an automotive vehicle for dampening vertical vitration of the vehicle body structure, and more particularly to an improvement of a variable damping valve assembly adapted for use in the damping mechanism.

Disclosed in Japanese Patent Laid-open Publication No. 61(1986)-202911 is a damping mechanism of an automotive vehicle which includes a hydraulic cylinder for supporting thereon the vehicle body structure, an accumulator connected to the hydraulic cylinder, and a variable damping valve assembly disposed between the hydraulic cylinder and the accumulator. In the damping mechanism, the opening degree of a throttle valve in the damping valve assembly is adjusted to control the flow of hydraulic fluid supplied to and discharged from the hydraulic cylinder thereby to dampen vertical vibration of the vehicle body structure

In the damping mechanism, a sealing member is assembled within the damping valve assembly to isolate an electric wiring portion for an actuator of the throttle valve from the hydraulic fluid supplied to and discharged from the hydraulic cylinder. However, the sealing member is assembled within the damping valve assembly without taking into consideration the hydraulic pressure applied thereto. For this reason, the durability of the actuator in the damping valve assembly is deteriorated in a short period of time.

According to US 5.145.206 a damping mechanism of an automotive vehicle is known, which includes :
a hydraulic cylinder supporting thereon a body structure of the vehicle,
an accumulator connected to the hydraulic cylinder, and
a variable damping valve assembly disposed between the hydraulic cylinder and the accumulator, said variable damping valve assembly comprising:
a housing formed with a first port for connection to the hydraulic cylinder and a second port for connection to the accumulator,
a variable throttle mechanism assembled within the housing for adjusting an opening degree of a fluid passage between the first and second ports,
an electric drive mechanism assembled within the housing for driving the variable throttle mechanism, and
a sealing member assembled within the housing for isolating an electric wiring portion of the electric drive mechanism from the variable throttle mechanism, wherein
said electric drive mechanism comprises a drive rod being displaced by said electric drive mechanism and a spool assembled with said drive rod to be displaced therewith, and said sealing member is applied with hydraulic pressure from said second port.

It is, therefore, an object of the present invention to provide a damping valve assembly adapted for use in the damping mechanism wherein a sealing nember is assembled to seal an electric wiring portion for an actuator of a throttle valve mechanism in such a manner as to avoid hydraulic pressure applied thereto directly from the hydraulic cylinder.

This object is solved by a damping mechanism having the technical features according to claim 1.

For a better understanding of the present invention, and to show how the same may be carried into effect, reference will now be made, by way of example, to the accompanying drawings, in which:
Fig. 1 is a schematic illustration of a suspension system of an automotive vehicle including a damping mechanism according to the present invention;
Fig. 2 is a sectional view of a variable damping valve assembly shown in Fig. 1;
Fig. 3 is an enlarged sectional view showing a throttle valve mechanism in the variable damping valve assembly;
Fig. 4 is a partly broken sectional view of an accumulator shown in Fig. 1; and
Figs. 5(A)-5(C) each are a time chart illustrating variations of hydraulic pressure (P1) in a hydraulic cylinder and hydraulic pressure (P2) in the accumulator under different vibrations.

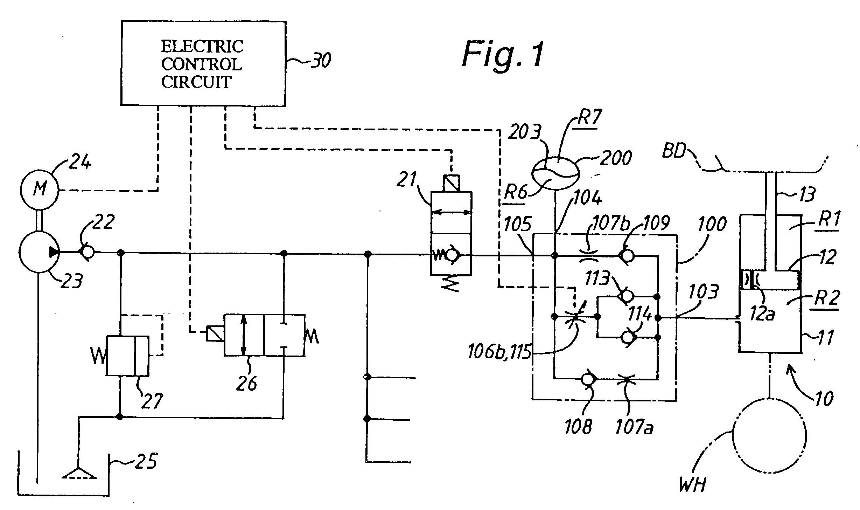

In Fig. 1 of the drawings, there is schematically illustrated a suspension system of an automotive vehicle including a damping mechanism according to the present invention. The suspension system includes a hydraulic cylinder 10 which is disposed between the vehicle body structure BD and each road wheel WH of the vehicle. The hydraulic cylinder 10 has a cylinder body subdivided by a piston 12 into upper and lower fluid chambers R1 and R2 filled with hydraulic fluid. The piston 12 is formed with an orifice passage 12a through which the hydraulic fluid is discharged from the upper fluid chamber R1 into the lower fluid chamber R2 or vice versa. A piston rod 13 extended from the piston 12 is connected to the vehicle body structure BD at its upper end for support of the same.

The lower fluid chamber R2 of hydraulic cylinder 10 is connected to a fluid pump 23 through a variable throttle valve assembly 100, an electromagnetic changeover valve 21 and a check valve 22. The fluid pump 23 is driven by an electric motor 24 to pump up hydraulic fluid from a fluid reservoir 25. The electromagnetic changeover valve 21 is retained in a first position in a deenergized condition to interrupt the flow of hydraulic fluid from the downstream of check valve 22 to the throttle valve assembly 1)0. When energized, the changeover valve 21 is switched over from the first position to a second position to permit the flow of hydraulic fluid from the downstream of check valve 22 to the throttle valve assembly 100. Disposed between the downstream of check valve 22 and the fluid reservoir 25 are an electromagnetic changeover valve 26 and a relief valve 27 in parallel. The electromagnetic changeover valve 26 is retained in a first position in a deenergized condition to interrupt fluid communication between the downstream of check valve 22 and the fluid reservoir 25. When energized, the changeover valve 26 is switched over from the first position to a second position to permit the fluid communication between the downstream of check valve 22 and the fluid reservoir 25. The relief valve 27 is normally retained in a position shown in the figure to interrupt fluid communication between the downstream of check valve 22 and the fluid reservoir 25 and to permit the fluid communication between the downstream of check valve 22 and the fluid reservoir 25 when the hydraulic pressure at the downstream of check valve 22 increases in excess.

The damping valve assembly 100, changeover valves 21, 26 and electric motor 24 are connected to an electric control apparatus 30 which includes a microcomputer connected to various kinds of sensors (not shown) such as a vehicle height sensor, a steering angle sensor, a vehicle speed sensor, a vertical acceleration sensor and the like to control the damping valve assembly 100, changeover valves 21, 26 and electric motor 24 in response to detection signals applied therefrom.

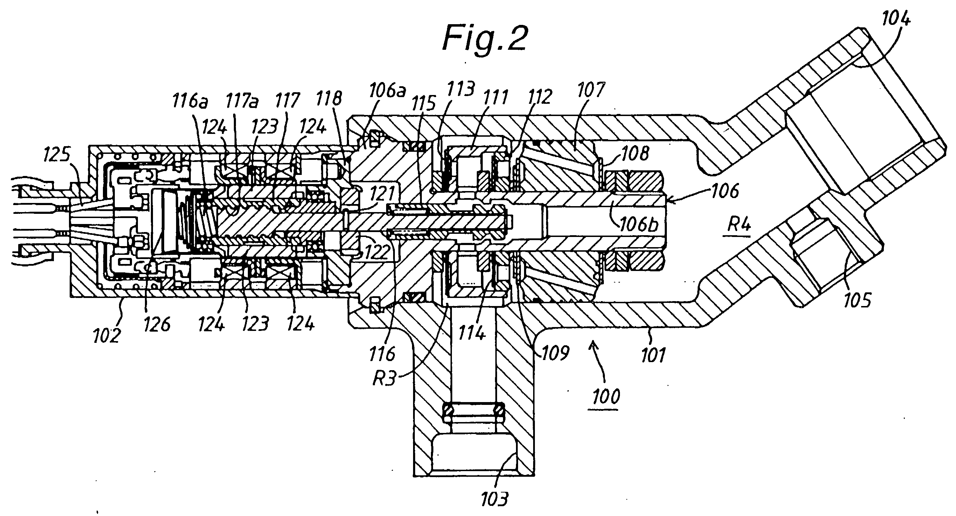

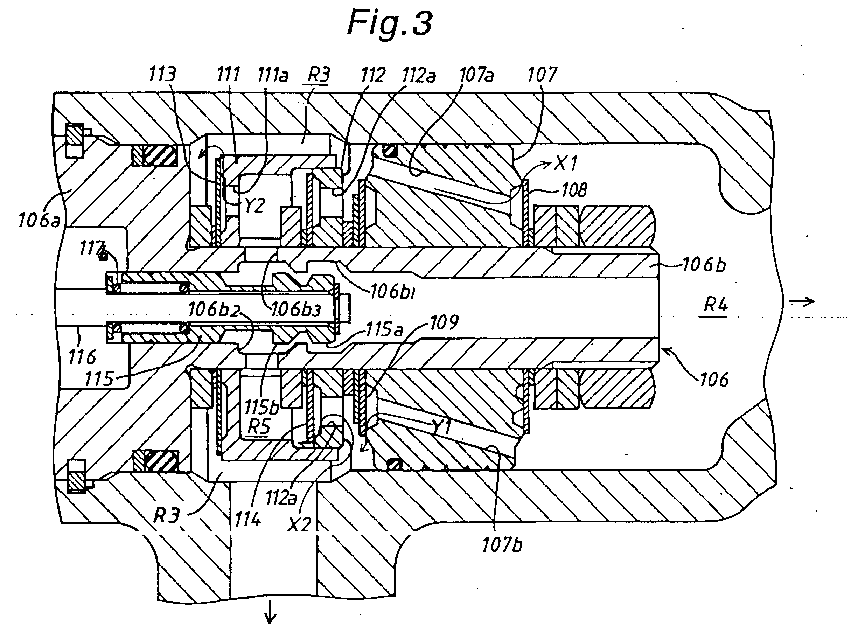

As shown in Figs. 2 and 3, the damping valve assembly 100 has cylindrical housings 101 and 102 jointed to one another in a liquid-tight manner. The housing 101 is formed with a first port 103 for connection to the lower fluid chamber R2 of hydraulic cylinder 10, a second port 104 for connection to the accumulator 200 and a third port 105 for connection to the changeover valve 21. The housing 101 contains therein a stepped sleeve 106 the large diameter portion 106a of which is fixedly coupled with the inner periphery of housing 101 in a liquid-tight manner. An annular valve seat member 107 is coupled with the small diameter portion 106b of stepped sleeve 106 to subdivide the interior of housing 101 into fluid chambers R3 and R4. The valve seat member 107 is formed with fluid passages 107a and 107b for fluid communication between the fluid chambers R3 and R4. A check valve plate 108 is assembled with one end of the valve seat member 107 to permit the flow of hydraulic fluid from the fluid chamber R3 to the fluid chamber R4 only in a direction shown by an arrow X1 in Fig. 3. A check valve plate 109 is assembled with the opposite end of the valve seat member 107 to permit the flow of hydraulic fluid only in a direction shown by an arrow Y1 in Fig. 3.

In the fluid chamber R3, a cup-shaped valve seat member 111 and an annular valve seat member 112 are coupled with the small diameter portion 106b of stepped sleeve 106 to form a fluid chamber R5 therein. The valve seat members 111 and 112 are formed with fluid passages 111a and 112a for fluid communication between the fluid chambers R3 and R5, respectively. A check valve plate 113 is assembled with the valve seat member 111 at one side of the fluid passage 111a to permit the flow of hydraulic fluid from the fluid chamber R5 to the fluid chamber R3 only in a direction shown by an arrow Y2 in Fig. 3. A check valve plate 114 is assembled with the valve seat member 112 at one side of the fluid passage 112a to permit the flow of hydraulic fluid from the fluid chamber R3 to the fluid chamber R5 only in a direction shown by an arrow X2 in Fig. 3.

A cylindrical spool 115 is axially slidably disposed within the stepped sleeve 106 to provide a variable throttle mechanism. The small diameter portion 106b of stepped sleeve 106 is formed at its internal periphery with axially spaced annular grooves 106b1 and 106b2, while the spool 115 is formed at its external periphery with annular projections 115a and 115b which cooperate with the annular grooves 106b1 and 106b2 to adjust an opening degree of an annular throttle passage formed between the small diameter portion 106b of sleeve 106 and the spool 115. The small diameter portion 106b of stepped sleeve 106 is formed with radial holes 106b3 in open communication with the annular groove 106b2 to provide a fluid communication between the fluid chambers R4 and R5. The cylindrical spool 115 is slidably coupled with one end portion of a drive rod 116 to be displaced therewith in an axial direction. The spool 115 is biased by a coil spring 117b toward the distal end of drive rod 116.

As shown in Fig. 2, the drive rod 116 is formed at one end thereof with a male screw 116a which is engaged with a female screw 117a formed in a hollow rotary shaft 117. The rotary shaft 117 is rotatably carried by an annular support member 118 fixedly coupled with the housing 101 in a liquid-tight manner. A radial pin 121 is embeided in an intermediate portion of drive rod 116, and an annular member 122 is fixedly coupled with the support member 118. The radial pin 121 is slidably engaged with an axial groove formed in the annular member 122 to restrict rotation of drive rod 116 with the rotary shaft 117 and to permit axial displacement of the drive rod 116. A rotor in the form of a plurality of circumferentially equally spaced permanent magnets 123 is fixedly mounted on the rotary shaft 117 in surrounding relationship therewith, and a stator in the form of a pair of solenoid windings 124 is fixedly coupled with the housing 102 in surrounding relationship with the permanent magnets 123. Thus, a stepping motor is composed of the rotor and stator.

The solenoid windings 124 are connected with electric wires 125 to be supplied with a drive current therethrough under control of the electric control apparatus 30. A sealing member 126 is positioned in the housing 102 to seal the solenoid windings 124 and electric wires 125 from the hydraulic fluid supplied to the damping valve assembly 100. The sealing member 126 is in the form of a bottomed cylindrical member of synthetic rubber which is disposed between the permanent magnets 123 and solenoid windings 124 to contain therein the permanent magnets 123, rotary shaft 117 and the one end portion of drive shaft 116. The sealing member 126 is fixed at its opening end to the support member 118 in a liquid-tight manner.

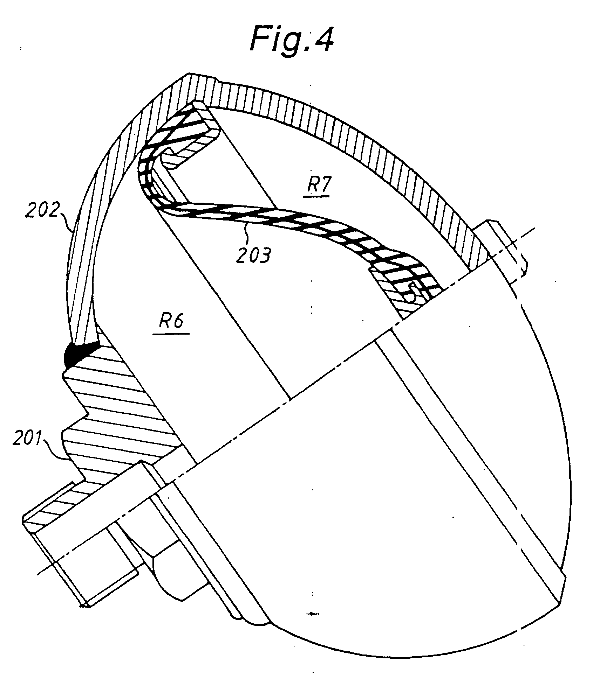

As shown in Fig. 4, the accumulator 200 is composed of a connector 201 for connection to the second port 104 of throttle valve assembly 100, a casing 202 of oval shape in cross-section welded to the connector 201 and a diaphragm 203 secured at its outer periphery to an internal surface of casing 202 to subdivide the interior of casing 202 into a fluid chamber R6 and a gas chamber R7. The fluid chamber R6 is filled with hydraulic fluid supplied from the fluid chamber R4 of throttle valve assembly 100, while the gas chamber R6 is filled with an amount of gas.

In operation of the suspension system for adjustment of the vehicle height, the electric control apparatus 30 acts to activate the electric motor 24 and to switch over the changeover valve 21 from the first position to the second position. Thus, the fluid pump 23 is driven by the electric motor 24 to pump up hydraulic fluid from the fluid reservoir 25 and to supply the hydraulic fluid into the lower fluid chamber R2 of hydraulic cylinder 10 through the changeover valve 21 and the damping valve assembly 100. In this instance, the hydraulic fluid is supplied into the lower fluid chamber R2 of hydraulic cylinder 10 through the third port 105, the annular throttle passage between the small diameter portion 106b of sleeve 106 and spool 115 and through the fluid passage 107b in the damping valve assembly 100. The hydraulic fluid supplied into the lower fluid chamber R2 is introduced into the upper fluid chamber R1 through the orifice passage 12a in piston 12, and in turn, the piston 12 is moved upward by a difference in pressure between the upper and lower fluid chambers R1 and R2 to raise the vehicle body structure.

When both the changeover valves 21 and 26 are switched over from their first positions to their second positions under control of the electric control apparatus 30, the hydraulic fluid in hydraulic cylinder 10 is discharged from the upper and lower fluid chambers R1 and R2 into the fluid reservoir 25 through the damping valve assembly 100 and changeover valves 21 and 26. This results in a decrease of a difference in pressure between the upper and lower fluid chambers R1 and R2. Thus, the piston rod 13 falls with the piston 12 due to the weight of the vehicle body structure.

In operation of the suspension system for dampening vibration of the vehicle body structure, both the changeover valves 21 and 26 are retained in their first positions, and the electric motor 24 is maintained in a deactivated condition. When the vehicle body structure is vertically vibrated due to variations of a travel road, the hydraulic cylinder 10 is shrunk or extended by the flow of hydraulic fluid between the fluid chambers R1 and R2. When the pressure in the lower fluid chamber R2 increases more than the pressure in the fluid chamber R6 of accumulator 200 due to shrinkage of the hydraulic cylinder 10, the hydraulic fluid in the lower fluid chamber R2 is discharged into the fluid chamber R6 of accumulator 200 through the fluid passage 107a and the check valve plate 108 and through the check valve plate 114 and the annular throttle passage between the small diameter portion 106b of sleeve 106 and the spool 115. When the pressure in the lower fluid chamber R2 decreases less than the pressure in the fluid chamber R6 of accumulator 200 due to extension of the hydraulic cylinder 10, the hydraulic fluid from the fluid chamber R6 of accumulator 200 is supplied into the fluid chambers R1 and R2 of hydraulic cylinder 10 through the fluid passage 107b and check valve plate 109 and through the annular throttle passage between the small diameter portion 106b of sleeve 106 and the spool 115 and the check valve plate 113.

In such operation as described above, the fluid passages 107a or 107b in the damping valve assembly 100 acts to throttle the flow of hydraulic fluid discharged from or supplied to the hydraulic cylinder 10, and the gas in the gas chamber R7 of accumulator 200 acts to resiliently absorb the pressure of hydraulic fluid applied to the fluid chamber R6. This is effective to dampen vibration of the body structure of the vehicle. Additionally, the opening degree of the annular throttle passage between the small diameter portion 106b and the spool 115 is adjusted under control of the electric control apparatus 30. In this instance, the solenoid windings 124 are energized by a drive current supplied through the electric wirings 125 under control of the electric control apparatus 30 to rotate the rotary shaft 117 and permanent magnets 123 about the axial line at an angle defined by a traveling condition of the vehicle. Thus, the drive rod 116 is axially displaced in accordance with the rotational angle of the rotary shaft 117 to adjust the opening degree of the annular throttle passage between the small diameter portion 106b of sleeve 106 and the spool 115. As a result, the flow of hydraulic fluid between the hydraulic cylinder 10 and accumulator 200 is controlled by adjustment of the opening degree of the annular throttle passage to control the damping characteristic of the suspension system in accordance with a traveling condition of the vehicle.

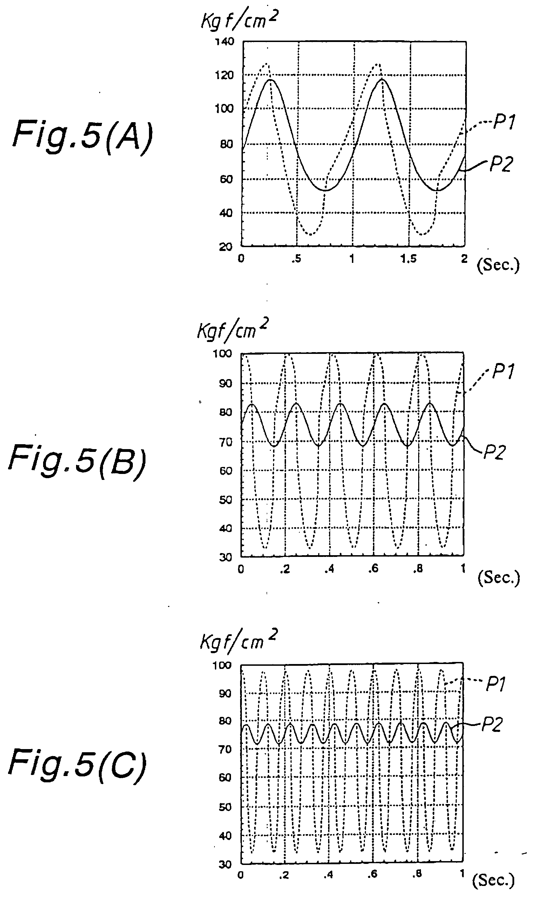

During damping operation of the suspension system described above, the pressure P1 in the fluid chamber R2 of hydraulic cylinder 10 and the pressure P2 in the fluid chamber R6 of accumulator 200 are increased when the hydraulic cylinder 10 is shrunk and decreased when the hydraulic cylinder 10 is extended. The variation of the pressure P1 becomes larger than that of the pressure P2, while the pressure P2 delays in variation from the pressure P1. The pressure P1 becomes higher than the pressure P2 when the hydraulic cylinder 10 is shrunk and becomes lower than the pressure P2 when the hydraulic cylinder 10 is expended. Illustrated in Figs. 5(A) are variations of the pressure P1 and P2 respectively by broken and solid lines in a condition where the body structure of the vehicle is vibrated with amplitude of 80 mm at a frequency of 1 Hz. Illustrated in Fig. 5(B) are variations of the pressure P1 and P2 respectively by broken and solid lines in a condition where the body structure of the vehicle is vibrated with amplitude of 20 mm at a frequency of 5 Hz. Illustrated in Fig. 5(C) are variations of the pressure P1 and P2 respectively by broken and solid lines in a condition where the body structure of the vehicle is vibrated with amplitude 10 mm at a frequency of 10 Hz.

Since in the damping valve assembly 100, tie first port 103 is connected to the lower fluid chamber R2 of hydraulic cylinder 10 while the second port 104 is connected to the fluid chamber R6 of accumulator 200, the pressure at the first port 103 becomes equal to the pressure P1 in the fluid chamber R2 while the pressure at the second port 104 becomes equal to the pressure P2 in the fluid chamber R6. Although the pressure at the second port 104 is directly applied to the sealing member 126 through a clearance between the spool 115 and drive rod 116, the pressure P2 is lower than the pressure P1, and the pressure at the first port 103 is applied to the sealing member 126 through the annular throttle passage between the small diameter portion 106b of sleeve 106 and the spool 115. This is effective to decrease the hydraulic pressure applied to the sealing member 126 during damping operation of the suspension system. Thus, the sealing member 126 may be formed in a relatively thin structure so that it can be fixedly coupled with the support member 118 in a limited space to ensure insulation of the electric wirings for the solenoid windings 124. As the sealing member 126 may be formed in a relatively thin structure, the clearance between the solenoid windings 124 and the permanent magnets can be made relatively small. This is useful to provide the drive mechanism for the variable throttle mechanism in a small size.

## Claims

1. A damping mechanism of an automotive vehicle including:
a hydraulic cylinder (10) supporting thereon a body structure of the vehicle,
an accumulator (200) connected to the hydraulic cylinder (10), and
a variable damping valve assembly (100) disposed between the hydraulic cylinder (10) and the accumulator (20)), said variable damping valve assembly (100) comprising:
a housing (101, 102) formed with a first port (103) for connection to the hydraulic cylinder (10) and a second port (104) for connection to the accumulator (200),
a variable throttle mechanism assembled within the housing (101, 102) for adjusting an opening degree of a fluid passage between the first and second ports (103, 104),
an electric drive mechanism assembled within the housing (101, 102) for driving the variable throttle mechanism, and
a sealing member (126) assembled within the housing (101, 102) for isolating an electric wiring portion of the electric drive mechanism from the variable throttle mechanise, wherein
said electric drive mechanism comprises a drive rod (116) being axially displaced by said electric drive mechanism and a spool (115) assembled with said drive rod (116) to be displaced therewith, and said sealing member (126) is applied with hydraulic pressure from said second pcrt (104) through a clearance between the spool (115) and the drive rod (116).

2. A damping mechanism of an automotive vehicle as recited in Claim 1, wherein said variable throttle mechanism comprises a sleeve (106) forming a fluid passage between the first and second ports of said housing and said cylindrical spool being axially slidably coupled within said sleeve for adjustment of the opening degree of said fluid passage.

3. A damping mechanism of an automotive vehicle as recited in Claim 2, wherein the actuator of said drive mechanism comprises a cylindrical stator connected to said electric wiring portion and a rotor coupled within said stator.

4. A damping mechanism of an automotive vehicle as recited in claim 3, wherein said sealing member is in the form of a bottomed cylindrical member disposed between said stator and said rotor.

## Patentansprüche

1. Dämpfungsmechanismus eines Kraftfahrzeugs mit:
einem Hydraulikzylinder (10), der eine Karosseriestruktur des Fahrzeugs stützt,
einem Speicher (200), der mit dem Hydraulikzylinder (10) verbunden ist, und
einer variablen Dämpfungsventilbaugruppe (100), die zwischen dem Hydraulikzylinder (10) und dem Speicher (200) angeordnet ist, wobei die variable Dämpfungsventilbaugruppe (100) folgendes aufweist:
ein Gehäuse (101, 102), das mit einem ersten Anschluss (103) für die Verbindung mit dem Hydraulikzylinder (10) und einem zweiten Anschluss (104) für die Verbindung mit dem Speicher (200) ausgebildet ist,
einen variablen Drosselmechanismus, der zum Einstellen eines Öffnungsgrads eines Fluidkanals zwischen dem ersten und zweiten Anschluss (103, 104) in das Gehäuse (101, 102) eingebaut ist,
einen elektrischen Antriebsmechanismus, der in das Gehäuse (101, 102) zum Antreiben des variablen Drosselmechanismus eingebaut ist, und
ein Dichtungselement (126), das in das Gehäuse (101, 102) zum Isolieren eines elektrischen Verdrahtungsabschnitts des elektrischen Antriebsmechanismus von dem variablen Drosselmechanismus eingebaut ist,
wobei der elektrische Antriebsmechanismus eine Antriebsstange (116) aufweist, die durch den elektrischen Antriebsmechanismus axial verschoben wird, und einen Kolben (115), der mit der Antriebsstange (116) montiert ist, um mit dieser verschoben zu werden, und wobei das Dichtungselement (126) von dem zweiten Anschluss (104) über einen Spalt zwischen dem Kolben (115) und der Antriebsstange (116) mit hydraulischem Druck beaufschlagt wird.

2. Dämpfungsmechanismus eines Kraftfahrzeugs nach Anspruch 1, wobei der variable Drosselmechanismus eine Hülse (106) aufweist, die einen Fluidkanal zwischen dem ersten und zweiten Anschluss des Gehäuses bildet und wobei der zylindrische Kolben zum Einstellen des Öffnungsgrads des Fluidkanals axial innerhalb der Hülse gleitfähig gekoppelt ist.

3. Dämpfungsmechanismus eines Kraftfahrzeugs nach Anspruch 2, wobei das Stellglied des Antriebsmechanismus einen zylindrischen Stator aufweist, der mit dem elektrischen Verdrahtungsabschnitt verbunden ist, und einen Rotor, der innerhalb des Stators gekoppelt ist.

4. Dämpfungsmechanismus eines Kraftfahrzeugs nach Anspruch 3, wobei das Dichtungselement die Gestalt eines zylindrischen Elements mit einem Boden hat, das zwischen dem Stator und dem Rotor angeordnet ist.

## Revendications

1. Un mécanisme d'amortissement de véhicule automobile incluant :
- un vérin hydraulique (10) supportant sur celui-ci une structure de châssis de véhicule ;
- un accumulateur (200) connecté au vérin hydraulique (10) ; et
- un ensemble de valves d'amortissement variable (100) disposées entre le vérin hydraulique (10) et l'accumulateur (200), ledit ensemble de valves d'amortissement variable (100) comprenant :
- un logement (101, 102) formé avec un premier port (103) pour la connexion au vérin hydraulique (10) et avec un deuxième pcrt (104) pour la connexion à l'accumulateur (200) ;
- un mécanisme d'étranglement variable assemblé à l'intérieur du logement (101, 102) pour ajuster un degré d'ouverture d'un passage de fluide entre les premier et troisième ports (103, 104) ;
- un mécanisme d'entraînement électrique assemblé à l'intérie ur du logement (101, 102) pour commander le mécanisme d'étranglement variable, et
- une pièce d'étanchéité (126) assemblée à l'intérieur du logement (101, 102) pour isoler une partie de câblage électrique du mécanisme d'entraînement électrique par rapport au mécanisme d'étranglement variable, dans lequel
- ledit mécanisme d'entraînement électrique comprend une tige d'entraînement (116) déplacée axialement par ledit mécanisme d'entraînement électrique et une bague (115) assemblée avec ladite tige d'entraînement (116) pour être déplacée avec celle-ci, et ladite pièce d'étanchéité (126) est appliquée avec la pression hydraulique provenant du deux ème port (104) par l'intermédiaire d'un jeu entre la bague (115) et la tige d'entraînement (116).

2. Un mécanisme d'amortissement de véhicule automobile selon la revendication 1, dans lequel le mécanisme d'étranglement variabl comprend un manchon (106) formant un passage de fluide entre les premier et deuxième ports dudit logement et ladite bague cylindrique est couplée de façon coulissante axialement à l'intérieur dudit manchon pour l'ajustement du degré d'ouverture dudit passage de fluide.

3. Un mécanisme d'amortissement de véhicule automobile selon la revendication 2, dans lequel l'actionneur dudit mécanisme d'entraînement comprend un stator cylindrique connecté à ladite partie de câblage électrique et un rotor couplé à l'intérieur dudit stator.

4. Un mécanisme d'amortissement de véhicule automobile selon la revendication 3, dans lequel ladite pièce d'étanchéité présente la fonne d'une pièce cylindrique avec un fond disposée entre ledit stator et ledit rotor.
